# EUROPÄISCHE PATENTSCHRIFT

(11) **EP 0 574 942 B1**
(45) Veröffentlichungstag und Bekanntmachung des Hinweises auf die Patenterteilung: **27.08.1997**
(21) Anmeldenummer: 93109777.8
(22) Anmeldetag: 18.06.1993
(51) Int. Cl.: A01F 29/00, A01K 5/00, A01D 87/00

(54) **Vorrichtung zum Aufnehmen, Transportieren, Zerkleinern und Austragen von Futter- oder Streumitteln**
Machine for gathering, transporting, cutting and distributing fodder or mulch
Dispositif pour ramasser, transporter, hacher et distribuer du fourrage ou du paillage

(30) Priorität: 19.06.1992 DE 4220005
(43) Veröffentlichungstag der Anmeldung: 22.12.1993
(73) Patentinhaber: von der Heide, Hans, D-49479 Ibbenbüren (DE)
(72) Erfinder: von der Heide, Hans, D-49479 Ibbenbüren (DE)
(74) Vertreter: Schulze Horn, Stefan, Dipl.-Ing. M.Sc.

(56) Entgegenhaltungen:
- EP-A- 0 172 084
- CH-A- 477 155
- DE-A- 1 582 429
- DE-A- 2 058 595
- FR-A- 2 075 379
- FR-A- 2 533 410

## Beschreibung

Die Erfindung betrifft eine Vorrichtung der im Oberbegriff des Anspruches 1 genannten Art.

Eine Vorrichtung der oben angegebenen Art ist aus EP 0 032 776 B1 bekannt. Diese bekannte Vorrichtung ist als Anbaugerät für einen Traktor ausgebildet und von diesem aus über dessen Zapfwelle und Hydraulikanlage antreibbar und betätigbar, was eine relativ große Gesamtlänge des Gespanns und eine relativ geringe Wendigkeit zur Folge hat. Zusätzlich zu der Zerkleinerungs- und Fördereinrichtung mit der Fräskette benötigt diese Vorrichtung noch eine weitere Vorschubeinrichtung für den zu zerkleinernden Block oder Ballen, wobei diese Vorschubeinrichtung hier aus einem Kratzboden besteht. Dieser Kratzboden erfordert eine Anzahl beweglicher Einzelteile und einen eigenen Antrieb, was den Konstruktions- und Herstellungsaufwand relativ hoch macht. Hinsichtlich der Funktion ist bei dieser Vorrichtung festzustellen, daß insbesondere bei langfaserigen Futter- oder Streumitteln, wie z.B. Grassilage oder Stroh, zum einen die Dosiereinrichtung nicht gleichmäßig arbeitet und zum anderen der Abwurf des Futter- oder Streumittels auf das Querförderband nicht zuverlässig erfolgt. Dadurch kommt es häufig zu einem unerwünschten Weiterfördern der Fasern des Futter- oder Streumittels durch die Zinken oder Zähne der Fräskette über den Abwurfbereich hinaus und infolge dessen zu Funktionsstörungen der Vorrichtung.

Weiterhin ist aus der DE-A-1 582 429 eine Vorrichtung zum Aufnehmen, Transportieren, Zerkleinern und Austragen von Futter- oder Streumitteln bekannt, in der eine Fräskette in ihrem oberen Bereich unter einer Dosiereinrichtung einen im wesentlichen horizontal verlaufenden Abschnitt aufweist, an den sich nach einer Umlenkung der Fräskette um 180° ein über einem Querförderband liegender zweiter horizontaler Abschnitt anschließt. Der abgewinkelte und annähernd horizontal verlaufende Bereich der Fräskette kann bezüglich seiner Winkelstellung zum übrigen Teil der Fräskette nach oben und unten verstellbar ausgebildet sein. Trotz des beschriebenen Verlaufs und der Verstellbarkeit der Fräskette ist auch bei dieser Vorrichtung im Betrieb zu beobachten, daß langfaserige Futter- oder Streumittel, insbesondere Grassilage oder Stroh, nicht zuverlässig von der Fräskette auf das Querförderband abgeworfen werden, sondern teilweise über den Abwurfbereich hinaus mitgenommen und so unerwünscht im Kreis gefördert werden.

Es stellt sich daher die Aufgabe, eine Vorrichtung der genannten Art anzugeben, die bei gleichem oder verringertem Konstruktions- und Herstellungsaufwand eine zuverlässige und betriebssichere Funktion insbesondere hinsichtlich des Dosierens und Abwerfens des Futter- oder Streumittels auf das Querförderband aufweist.

Die Lösung dieser Aufgabe gelingt erfindungsgemäß durch eine Vorrichtung der eingangs genannten Art mit den kennzeichnenden Merkmalen des Patentanspruches 1.

Mit der erfindungsgemäß ausgebildeten Vorrichtung wird einerseits eine gute Funktion der Dosiereinrichtung, die über dem ersten horizontalen Fräskettenabschnitt angeordnet ist, und andererseits ein zuverlässiges Abwerfen des zerkleinerten Futter- oder Streumittels von der Fräskette auf das Querförderband, das unterhalb des zweiten horizontalen Förderbandabschnittes angeordnet ist, erreicht. Die gezielte Verschwenkung der Zinken oder Zähne oder der Querstäbe insgesamt wird dabei dazu benutzt, die Fräs- und Mitnahmewirkung in unterschiedlichen Fräsketten-Bahnabschnitt gezielt zu verändern und insbesondere im Abwurfbereich gänzlich aufzuheben. Der Austrag wird dadurch vergleichmäßigt und ein Fördern von Futter- oder Streumitteln im Kreis über den Abwurfbereich hinaus wird vermieden.

Weitere Ausgestaltungen der Vorrichtung hinsichtlich der Fräskette sind in den Ansprüchen 2 und 3 angegeben.

Um das Querförderband unabhängig von der Längenerstrekkung des zweiten horizontalen Förderbandabschnittes relativ schmal halten zu können, ist vorgesehen, daß beiderseits über dem Querförderband in dessen Längsrichtung verlaufende, trichterförmig geneigte Leitbleche angeordnet sind.

Hinsichtlich der in der Vorrichtung eingesetzten Dosiereinrichtung wird vorgeschlagen, daß diese als ein gegen die Förderrichtung der Fräskette arbeitender, höhenverstellbarer Raffer ausgebildet ist. Dieser Raffer ist ein robustes, an sich z.B. von Ballenpressen bekanntes und bewährtes Bauteil und stellt eine störungsfreie Dosierung sicher. Zusätzlich können zwischen den Raffzinken, wie an sich ebenfalls bekannt, Abstreifbleche angeordnet sein, die für ein zuverlässiges Lösen von zurückgefördertem Futter- oder Streumittel von den Zinken bei deren Rückbewegung sorgen.

Damit vom Raffer zurück in Richtung zum Behälter geförderte Überschußmengen des Futter- oder Streumittels nicht neben den Behälter fallen und verlorengehen oder den Antrieb des Raffers beeinträchtigen, ist vorgesehen, daß über dem Raffer und über dem diesem benachbarten Teil des Behälters eine flexible, gegen eine Rückstellfederkraft nach oben hin durch das Futter- oder Streumittel auslenkbare Abdeckung angeordnet ist.

Um die Schwerkraft für den Vorschub und Andruck des zu zerkleinernden, im Behälter befindlichen Blocks oder Ballens zur bzw. an die Fräskette nutzen zu können und um einen Kratzboden oder dergleichen aufwendigen Vorschubmechanismus entbehrlich zu machen, weist zweckmäßig die den Futtermittel- oder Streumittelblock oder -ballen tragende Fläche der Ladeschaufel und/oder des Behälters im Zerkleinerungs- und Austragbetrieb eine zur Fräskette hin abwärts geneigte Lage auf und ist mit reibungsvermindernden Tragmitteln, wie Rollen, belegt. Quaderförmige Blöcke oder Ballen können so ohne weiteres Zutun nachrutschen und auch große und schwere Rundballen können problemlos unter selbsttätiger Drehung um ihre Mittelachse abgewickelt und mit geringem Kraftaufwand zerkleinert werden. Bedarfsweise kann dieser Vorgang noch durch ein nach und nach erfolgendes weiteres Hochschwenken der Ladeschaufel unterstützt werden.

Die Vorrichtung kann, wie dies aus dem Stand der Technik bekannt ist, als Anbaugerät für einen Traktor ausgeführt sein. Alternativ wird vorgeschlagen, daß die Vorrichtung als selbstfahrende Einheit mit einem Fahrgestell mit Rädern und eigenen Antriebs- und Steuerungsmitteln ausgeführt ist. In dieser Ausgestaltung kann die Vorrichtung insgesamt sehr kompakt gehalten werden, wobei die Höhe und Breite der Vorrichtung praktisch den Maximalmaßen der verarbeitbaren Blöcke oder Ballen entsprechen und wobei auch die Baulänge relativ gering gehalten werden kann, da nur eine relativ kleine Antriebseinheit sowie ein kompakt gestaltbarer Führerplatz benötigt werden. Dies erlaubt einen traktorunabhängigen Betrieb der Vorrichtung und einen Einsatz auch in räumlich beengten Stallungen.

Ein Ausführungsbeispiel der Erfindung wird im folgenden anhand einer Zeichnung erläutert. Die Figuren der Zeichnung zeigen:
- Figur 1: eine Vorrichtung in Seitenansicht, teils im Längsschnitt und
- Figur 2: einen Ausschnitt einer Fräskette als Teil der Vorrichtung, in Aufsicht von oben.

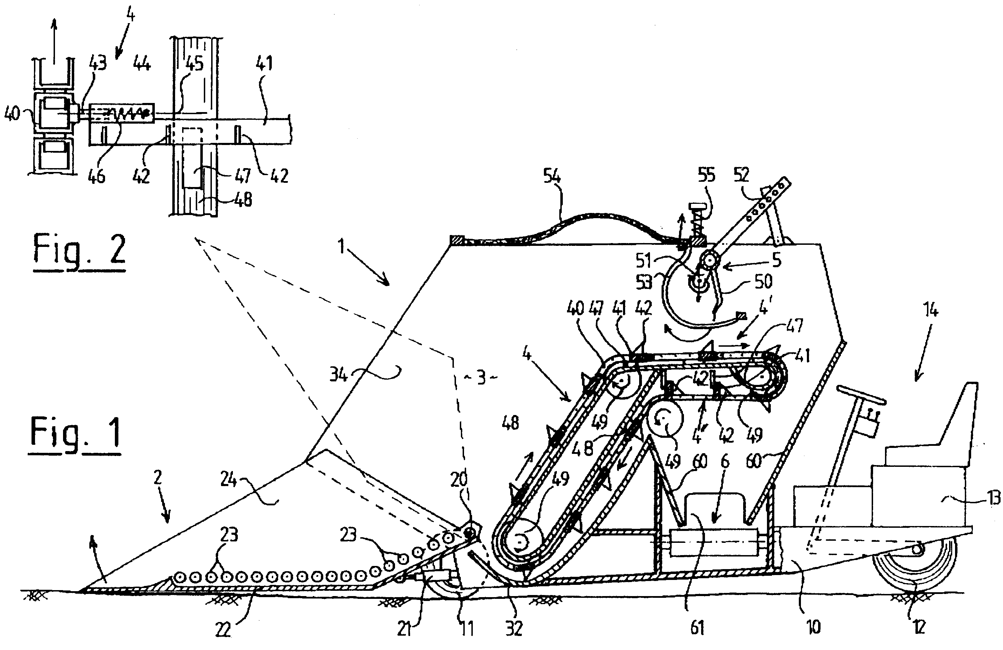

Gemäß Figur 1 der Zeichnung ist das hier dargestellte Ausführungsbeispiel der Vorrichtung 1 als selbstfahrende Einheit mit einem Fahrgestell 10 und Rädern 11, 12 ausgeführt. An der Vorderseite der Vorrichtung 1, d.h. in der Zeichnung links, ist eine Ladeschaufel 2 angeordnet, die mittels einer Kolben-Zylinder-Einheit 21 um eine Schwenkachse 20 aufwärts und abwärts verschwenkbar ist, wobei in der Figur 1 die Ladeschaufel 2 in ihrer abgesenkten Stellung gezeigt ist. Nach hinten, d.h. in der Zeichnung nach rechts, schließt sich ein Behälter 3 an, der durch einen Behälterboden 32 sowie zwei Seitenwände 34, von denen hier die hintere sichtbar ist, gebildet ist. An seiner der Ladeschaufel 2 gegenüberliegenden Stirnseite wird der Behälter 3 durch eine schräg nach oben und hinten verlaufende Fräskette 4 begrenzt, die als Zerkleinerungs- und Fördereinrichtung dient. Weiter nach hinten geht die Fräskette 4 in einen ersten horizontalen Abschnitt 4' über, über welchem eine Dosiereinrichtung 5, die als Raffer ausgeführt ist, angeordnet ist. Nach einer Umlenkung um 180° durchläuft die Fräskette 4 einen zweiten horizontalen Abschnitt 4''. Unterhalb dieses zweiten horizontalen Fräskettenabschnittes 4'' ist ein Querförderband 6 angeordnet.

In der in Figur 1 gezeigten Stellung der Ladeschaufel 2 kann diese durch Vorwärtsfahren der Vorrichtung 1 einen zu zerkleinernden und zu verteilenden Futter- oder Streumittelblock oder -ballen (nicht dargestellt) aufnehmen. Zur Verminderung der Reibung zwischen der Grundplatte 22 der Ladeschaufel 2 und dem aufgenommenen Block oder Ballen sind an der Grundplatte 22 mehrere Rollen 23 mit parallel zueinander und in Vorrichtungsquerrichtung verlaufenden Drehachsen angeordnet. Im Hintergrund ist noch eine Seitenplatte 24 der Ladeschaufel 2 erkennbar.

Durch Betätigen der Kolben-Zylinder-Einheit 21 kann die Ladeschaufel 2 zusammen mit einem darauf befindlichen Block oder Ballen um die Schwenkachse 20 nach oben hin verschwenkt werden, bis die Ladeschaufel 2 die in Figur 1 gestrichelt angedeutete Lage einnimmt. In dieser Stellung bildet die Ladeschaufel 2 zusammen mit dem Behälter 3 der Vorrichtung 1 einen trichterförmigen Raum, wobei aufgrund der Rollen 23 der darin befindliche Block oder Ballen durch Schwerkraftwirkung an die Fräskette 4 herangeführt und durch sein Eigengewicht an diese angedrückt wird.

Die Fräskette 4 besteht hier aus zwei parallel zueinander umlaufenden endlosen Gliederketten 40, die in Abständen durch Querstäbe 41 miteinander verbunden sind. Die Querstäbe 41 sind jeweils mit mehreren nach außen hin vorragenden Mitnehmerzinken oder -zähnen 42 besetzt, mittels welchen nach und nach Bestandteile des Futtermittel- oder Streumittelblocks oder - ballens von diesem abgetragen werden. Dazu wird die Fräskette 4 mittels eines hier nicht eigens dargestellten Antrieborgans, z.B. ein Hydraulikmotor, in Pfeilrichtung in Bewegung gesetzt. Die jeweils benötigten Umlenkungen der Fräskette 4 bzw. deren Gliederketten 40 erfolgt durch mehrere Paare von Kettenrädern 49, von denen hier jeweils nur das hintere sichtbar ist.

Der über dem im höchsten Bereich der Fräskette 4 liegenden ersten horizontalen Fräskettenabschnitt 4' angeordnete Raffer 5 besteht aus einem Kurbeltrieb 51 mit Lenkern 52 sowie einer Anzahl von Raffzinken 50, deren Raffbewegung entgegen der Laufrichtung der Fräskette 4 gerichtet ist, wie dies durch den von der Spitze des in der Figur 1 sichtbaren Raffzinkens 50 ausgehenden Pfeil angedeutet ist. Zwischen den einzelnen Raffzinken 50 sind Abstreifbleche 53 vorgesehen, die dazu dienen, beim Rückzug der Raffzinken 50 am Ende der Aufwärtsbewegung eventuell an den Zinken 50 anhaftende Bestandteile des Futter- oder Streumittels abzustreifen. Mittels dieses Raffers 5 wird die von der Fräskette 4 geförderte Menge an Futter- oder Streumittel dosiert, wobei die gewünschte Dosierung durch eine Höheneinstellung des Raffers 5, wie durch den Doppelpfeil an dem Kurbeltrieb 51 angedeutet, wählbar ist.

Über dem Abgabebereich des Raffers 5 und über dem hinteren Teil des Behälters 3 ist zur Vermeidung von Verlusten an Futter- oder Streumitteln eine flexible Abdeckung 54 angebracht, die an ihrem rafferseitigen Ende durch eine Andruckfederanordnung 55 nach unten gedrückt wird. Wird besonders viel Futter- oder Streumittel in diesen Bereich des Behälters 3 gefördert, kann die Abdeckung 54 durch das Futter- oder Streumittel gegen die Kraft der Andruckfederanordnung 55 nach oben bewegt werden. Sobald die dort befindliche Futter- oder Streumittelmenge wieder reduziert ist, bewegt sich die Abdeckung 54 wieder in ihre Grundstellung nach unten.

Anschließend an den ersten horizontalen Fräskettenabschnitt 4' wird die Fräskette 4 um 180° nach unten hin umgelenkt und durchläuft dann einen zweiten horizontalen Abschnitt 4'', in welchem ein Abwurf des von der Fräskette 4 gelockerten und geförderten Futter- oder Streumittels auf das darunter liegende Querförderband 6 erfolgt. Um einen sicheren Abwurf zu gewährleisten, insbesondere bei der Verarbeitung von langfaserigem, feuchtem Futter- oder Streumittel, sind bei der hier dargestellten Vorrichtung 1 die Querstäbe 41 der Fräskette 4 verschwenkbar ausgebildet. Wie aus der Figur 1 ersichtlich ist, nehmen die Querstäbe 41 mit den Mitnehmerzinken oder -zähnen 42 im zweiten horizontalen Fräskettenabschnitt 4'' eine gegenüber der Normallage etwa um 90° nach oben hin gegen den Uhrzeigersinn verschwenkte Stellung ein. Hierdurch weisen nun die Zinken oder Zähne 42 in eine entgegen der Laufrichtung der Fräskette 4 weisende Richtung, so daß sie ihre Mitnahmewirkung vollständig verlieren und ein sicherer Abwurf des Futter- oder Streumittels gewährleistet wird.

Um diese Verschwenkbarkeit der Querstäbe 41 zu erreichen, sind diese an ihren Enden gelenkig mit den beiden parallelen Gliederketten 40 der Fräskette 4 verbunden und durch eine Federanordnung mit einer in Verschwenkungsrichtung wirkenden Kraft bzw. einem entsprechenden Drehmoment vorbelastet. In den Bereichen außerhalb des Abwurfbereiches oberhalb des Querförderbandes 6 werden die Querstäbe 41 mittels einer Führungseinrichtung in ihrer normalen Lage, d.h. einer Lage mit nach außen vorragenden Zinken oder Zähnen 42, gehalten. Diese Führungseinrichtung besteht einerseits aus mindestens einer umlaufenden, parallel zur Fräskette 4 angeordneten Gleitbahn 48 und andererseits aus je Querstab 41 mindestens einer nachgeschleppten Gleitzunge 47, die in der Normallage der Querstäbe 41 an der Gleitbahn 48 anliegt und an dieser bei der Bewegung der Fräskette 4 entlanggleitet. Dabei sorgen die Gleitzungen 47 dafür, daß die Querstäbe 41 gegen die Kraft der oben erwähnten Federanordnung ihre Normallage einnehmen. Wie die Figur 1 weiter zeigt, ist im Bereich des zweiten horizontalen Abschnittes 4'' der Fräskette 4 die Gleitbahn unterbrochen, so daß hier eine Anlage für die Gleitzungen 47 fehlt. Dadurch kann das von der Federanordnung aufgebrachte Drehmoment die Querstäbe 41 um etwa 90° in die Abwurfstellung verschwenken. Am Ende des zweiten horizontalen Fräskettenabschnittes 4'' gelangen die Gleitzungen 47 wieder in Anlage an die Gleitbahn 48, wodurch die Querstäbe 41 wieder in ihre Normallage verschwenkt werden.

Um das Querförderbahnd 6 relativ schmal halten zu können, sind über diesem zwei trichterförmig ausgerichtete Wände 60 vorgesehen, die das von dem zweiten horizontalen Fräskettenabschnitt 4'' abfallende Futter- oder Streumittel zum Querförderband 6 leiten, mittels welchem es dann durch eine der beiden seitlichen Austragöffnungen 61 wahlweise nach links oder rechts austragbar ist.

Da die Vorrichtung 1 hier als selbstfahrende Einheit ausgebildet ist, ist in deren hinterem Teil, d.h. in der Zeichnung rechten Teil, ein Antrieb 13, z.B. ein Dieselmotor mit Hydraulikpumpe, und ein Führerplatz 14 für einen Fahrzeugführer angeordnet. Die beweglichen Teile der Vorrichtung 1, insbesondere die Fräskette 4, der Raffer 5 und das Querförderband 6 werden zweckmäßig durch diesen zugeordnete Hydraulikmotoren angetrieben, die hier nicht eigens dargestellt sind. Auch der Fahrantrieb der Vorrichtung 1 wird zweckmäßig durch einen Hydraulikmotor gebildet.

Figur 2 der Zeichnung zeigt im Detail die schwenkbewegliche Verbindung zwischen einer der Gliederketten 40 der Fräskette 4 einerseits und einem der Querstäbe 41 andererseits. An einem der die Gliederkette 40 bildenden Kettenglieder ist hier ein in Richtung zur gegenüberliegenden, hier nicht gezeigten zweiten Gliederkette weisender Bolzen 43 angebracht, z.B. angeschweißt, auf welchen eine fest mit dem Querstab 41 verbundene Hülse 44 konzentrisch und drehbeweglich aufgesetzt ist. Die Längsmittelachse des Bolzens 43 und der Hülse 44 bildet zugleich die Schwenkachse 45 für den Querstab 41. Zwischen dem äußeren Ende des Bolzens 43 und dem von diesem abgewandten Ende der Hülse 44 ist eine Feder 46, hier eine Schraubenfeder, so vorgespannt eingebaut, daß sich ein Drehmoment zwischen der Gliederkette 40 und dem Querstab 41 ergibt, durch welches in der Figur 2 der Querstab 41 und die mit diesem fest verbundene, z.B. verschweißte Gleitzunge 47 nach unten hin gedrückt wird. Hierdurch wird die Gleitzunge 47 an die unter ihr liegende Gleitbahn 48, die vorzugsweise aus verschleiß- und geräuschmindernden Kunststoffstreifen besteht, angedrückt, ohne daß eine weitere Verschwenkung des Querstabes 41 erfolgen kann. Nur dort, wo die Gleitbahn 48 fehlt, kann die Feder 46 den Querstab 41 mit der Gleitzunge 47 und den Zinken 42 verschwenken. Je nach Baubreite der Fräskette 4 können an den Querstäben 41 ein, zwei oder auch mehr Gleitzungen 47 vorgesehen werden, wobei dann eine entsprechende Zahl von Gleitbahnen 48 an der Vorrichtung 1 angebracht ist.

## Patentansprüche

1. Vorrichtung zum Aufnehmen, Transportieren, Zerkleinern und Austragen von Futter- oder Streumitteln, insbesondere Silage, Biertreber, Heu, Corn-Cob-Mix oder Stroh, in Form von Blöcken oder Rundballen, mit einem an seiner einen Stirnseite offenen Behälter (3) mit einer an dieser offenen Stirnseite angeordneten, verschwenkbaren Ladeschaufel (2), mit einer an der der offenen Stirnseite gegenüberliegenden Stirnseite angeordneten Zerkleinerungs- und Fördereinrichtung, die aus einer schräg nach oben verlaufenden Fräskette (4) besteht, mit einer über deren höchstem Bereich angeordneten Dosiereinrichtung (5), die nach unten hin zur Fräskette (4) vorragende bewegliche Zinken (50) aufweist, und mit einem unter dem oberen Ende der Zerkleinerungs- und Fördereinrichtung angeordneten Querförderband (6) für den seitlichen Austrag des zerkleinerten Futter- oder Streumittels, dadurch gekennzeichnet,
- daß die Fräskette (4) in ihrem oberen Bereich unter der Dosiereinrichtung (5) einen im wesentlichen horizontal verlaufenden Abschnitt (4') aufweist, an den sich nach einer Umlenkung der Fräskette (4) um 180° ein über dem Querförderband (6) liegender zweiter horizontaler Abschnitt (4'') anschließt,
- daß die Fräskette (4) aus mindestens zwei endlosen umlaufenden Gliederketten (40) besteht, die in Abständen durch Querstäbe (41) verbunden sind, welche vorragende Mitnehmerzinken oder -zähne (42) tragen,
- daß die Mitnehmerzinken oder -zähne (42) für sich oder die Querstäbe (41) mitsamt den Mitnehmerzinken oder -zähnen(42) um eine zur Längsrichtung der Querstäbe (41) parallele Achse (45) verschwenkbar ausgebildet sind und
- daß eine Führungseinrichtung für die Verschwenkung der Mitnehmerzinken oder -zähne (42) oder der Querstäbe (41) vorgesehen ist, wobei durch diese Führungseinrichtung die Mitnehmerzinken oder -zähne (42) zumindest in dem schräg nach oben verlaufenden und dem anschließenden ersten horizontalen Fräskettenabschnitt (4') in einer Mitnahmestellung mit im wesentlichen senkrecht zur Fräskettenebene weisender Ausrichtung haltbar sind und zumindest in dem über dem Querförderband (6) liegenden zweiten horizontalen Fräskettenabschnitt (4'') in eine Abwurfstellung mit im wesentlichen gegen die Laufrichtung der Fräskette (4) weisender Ausrichtung verschwenkbar sind.

2. Vorrichtung nach Anspruch 1, dadurch gekennzeichnet, daß die Verschwenkung in die Abwurfstellung mittels Federkraft erfolgt, wobei eine entsprechende Feder oder Federanordnung (46) als Teil der Fräskette (4) ausgebildet ist.

3. Vorrichtung nach Anspruch 1 oder 2, dadurch gekennzeichnet, daß die Führungseinrichtung aus mindestens einer parallel zur Fräskette (4) verlaufenden Gleitbahn (48) besteht, daß je Querstab (41) oder verschwenkbarem Mitnehmerzinken oder -zahn (42) an diesem mindestens eine nachgeschleppte, als Schwenkhebel dienende Gleitzunge (47) angeordnet ist und daß die Gleitbahn (48) in dem Bereich der Abwurfstellung der Zinken oder Zähne (42) unterbrochen oder mit einem Höhenversatz ausgebildet ist.

4. Vorrichtung nach einem der Ansprüche 1 bis 3, dadurch gekennzeichnet, daß beiderseits über dem Querförderband (6) in dessen Längsrichtung verlaufende, trichterformlg geneigte Leitbleche (60) angeordnet sind.

5. Vorrichtung nach einem der Ansprüche 1 bis 4, dadurch gekennzeichnet, daß die Dosiereinrichtung (5) als ein gegen die Förderrichtung der Fräskette (4) arbeitender, höhenverstellbarer Raffer (5) ausgebildet ist.

6. Vorrichtung nach Anspruch 5, dadurch gekennzeichnet, daß über dem Raffer (5) und über dem diesem benachbarten Teil des Behälters (3) eine flexible, gegen eine Rückstellfederkraft nach oben hin durch das Futter- oder Streumittel auslenkbare Abdeckung (54) angeordnet ist.

7. Vorrichtung nach einem der Ansprüche 1 bis 6, dadurch gekennzeichnet, daß die den Futtermittel- oder Streumittelblock oder -ballen tragende Fläche (22) der Ladeschaufel (2) und/oder des Behälters (3) im Zerkleinerungs- und Austragbetrieb eine zur Fräskette (4) hin abwärts geneigte Lage aufweist und mit reibungsvermindernden Tragmitteln (23), wie Rollen, belegt ist.

8. Vorrichtung nach einem der Ansprüche 1 bis 7, dadurch gekennzeichnet, daß diese als selbstfahrende Einheit mit einem Fahrgestell (10) mit Rädern (11, 12) und eigenen Antriebs- und Steuerungsmitteln (13, 14) ausgeführt ist.

## Claims

1. Machine for gathering, transporting, cutting and distributing fodder or mulch, particularly ensilage, malt husks, hay, Corn-cob-Mix or straw, in the form of blocks or round bales, comprising a container (3) open at the one front side thereof with a pivotable loading shovel (2) arranged at this open front side, with a cutting and transporting device arranged at the front side opposite to the open front side, with the cutting and transporting device consisting of a chain cutter (4) extending upwards in an angled fashion, with a dosing apparatus (5) arranged at the uppermost area of the chain cutter, with the dosing apparatus comprising movable tines (50) protruding downwards to the chain cutter, with a cross conveyor belt (6) arranged below the upper end of the cutting and transporting device,
**characterized in**
- that the chain cutter (4) in the upper area thereof below the dosing apparatus (5) comprises a section (4') extending substantially horizontally with a second section (4'') directly continuing from the section (4') and extending above the cross conveyor belt (6) behind a reverse turn of 180° of the chain cutter (4),
- that the chain cutter (4) consists of at least two endless circulating link chains (40) spacedly connected by cross rods (41) carrying protruding pusher tines or teeth (42),
- that the pusher tines or teeth (42) as such or the cross rods (41) together with the pusher tines or teeth (42) are designed to be swivelled about an axis (45) in parallel with the longitudinal direction of the cross rods (41),
- that a guiding device for swivelling the pusher tines or teeth (42) or the cross rods (41) is provided wherein by this guiding device the pusher tines or teeth (42) are to be held in a pushing position substantially pointing perpendicularly towards the plane of the chain cutter at least in the chain cutter section (4') extending upwards in an angled fashion and in the subsequent first horizontal chain cutter section, and are pivotable in a discarding position substantially pointing against the running direction of the chain cutter (4) at least in the second horizontal chain cutter section (4'') positioned above the cross conveyor belt (6).

2. Machine according to claim 1, characterized in that the swivelling in the discarding position is accomplished by a spring force wherein a corresponding spring or spring arrangement (46) is formed as a part of the chain cutter (4).

3. Machine according to claim 1 or 2, characterized in that the guiding device consists of at least one sliding way (48) extending in parallel with the chain cutter (4), that at least one trailed sliding tab (47) serving as a swivel lever is arranged at each cross rod (41) or pivotable pusher tine or tooth (42), and that the sliding way (48) in the area of the discarding position of the tines or teeth (42) is discontinued or provided with a step.

4. Machine according to one of the claims 1 to 3, characterized in that at both sides above the cross conveyor belt (6) funnel-shaped inclined guiding plates (60) are arranged extending in the longitudinal direction of the cross conveyor belt.

5. Machine according to one of the claims 1 to 4, characterized in that the dosing apparatus is formed as a reel (5) adjustable in its altitude and operating against the transporting direction of the chain cutter (4).

6. Machine according to claim 5, characterized in that a flexible cover (54) is arranged above the reel (5) and above the part of the container (3) adjacent to the reel with the cover movable upwards by the fodder or mulch against a restoring spring force.

7. Machine according to one of the claims 1 to 6, characterized in that the surface (22) of the loading shovel (2) and/or the container (3) supporting the fodder or mulch block or bale comprises a position sloped downwards towards the chain cutter (4) in the cutting and distributing mode with the surface (22) covered with friction reducing carrying means (23) like rollers.

8. Machine according to one of the claims 1 to 7, characterized in that it is designed as a self-propelling unit with a chassis (10) with wheels (11, 12) and dedicated driving and steering means (13, 14).

## Revendications

1. Dispositif pour ramasser, transporter, hacher et distribuer du fourrage ou des produits à épandre, en particulier de l'ensilage, de la drêche, du foin, du mélange de maïs haché (corn-cob) ou de la paille, sous la forme de blocs ou de balles rondes, ce dispositif étant muni d'un récipient (3) ouvert à l'une de ses faces frontales et avec une benne frontale pivotante (2) disposée sur l'une des faces frontales ouvertes de ce récipient, ainsi que d'un organe de hachage et de transport disposé sur la face frontale opposée à la face frontale ouverte, cet organe se composant d'une chaîne dentée (4) courant de façon inclinée vers le haut, ainsi que d'un moyen de dosage (5) disposé au-dessus de la zone la plus haute de l'organe et qui comporte des pointes mobiles (50) faisant saillie vers le bas, en direction de la chaîne dentée (4), et d'une bande transporteuse transversale (6) disposée sous l'extrémité supérieure de l'organe de hachage et de transport, pour l'épandage latéral du fourrage haché ou des produits à épandre hachés, caractérisé :
- en ce que la chaîne dentée (4) comporte dans sa zone supérieure sous l'organe de dosage (5) un tronçon (4') courant de façon sensiblement horizontale, et auquel se raccorde, après un changement de direction de la chaîne dentée (4) à 180°, un deuxième tronçon horizontal (4'') disposé au-dessus de la bande transporteuse transversale (6),
- en ce que la chaîne dentée (4) se compose d'au moins deux chaînes tournantes (40) fermées sur elles-mêmes, et qui sont reliées de place en place par des barres transversales (41) portant des pointes ou des dents de saisie en saillie (42),
- en ce que les pointes ou les dents de saisie (42), en elles mêmes, ou les barres transversales (41) équipées des pointes ou des dents de saisie (42) sont réalisées pivotantes autour d'un axe (45) parallèle à la direction longitudinale des barres transversales (41), et
- en ce qu'il comporte un organe de guidage pour le basculement des pointes ou des dents de saisie (42) ou des barres transversales (41), les pointes ou les dents de saisie (42) étant susceptibles, au moins dans le tronçon incliné vers le haut de la chaîne dentée et dans le premier tronçon horizontal de chaîne dentée (4') s'y raccordant, d'être maintenues dans une position de saisie orientée dans une direction sensiblement perpendiculaire au plan de la chaîne dentée, et étant susceptibles, au moins dans le deuxième tronçon horizontal (4'') de chaîne dentée disposée au-dessus de la bande transporteuse transversale (6), d'être pivotées dans une position de déchargement orientée sensiblement dans le sens opposé au sens de déplacement de la chaîne dentée (4).

2. Dispositif selon la revendication 1, caractérisé en ce que le pivotement dans la position de déchargement est réalisé à l'aide d'une force élastique, un ressort ou un agencement élastique (46) correspondant étant réalisé comme une partie de la chaîne dentée (4).

3. Dispositif selon la revendication 1 ou 2, caractérisé en ce que l'organe de guidage se compose d'au moins une voie de glissement (48) courant parallèlement à la chaîne dentée (4), en ce que, à chaque barre transversale (41) ou à chaque pointe ou dent de saisie (42), est disposé sur cette voie, au moins une languette de glissement (47) remorquée et servant de levier de pivotement, et en ce que la voie de glissement (48) est interrompue ou est réalisée avec un décalage en hauteur, dans la zone de la position de décharge des pointes ou des dents (42).

4. Dispositif selon l'une des revendications 1 à 3, caractérisé en ce qu'il comporte des deux côtés au-dessus de la bande transporteuse transversale (6) des tôles de guidage (60) courant dans la direction longitudinale de cette bande transporteuse et inclinées en forme de trémie.

5. Dispositif selon l'une des revendications 1 à 4, caractérisé en ce que l'organe de dosage (5) est réalisé sous la forme d'un moyen de pressage (5) travaillant à l'encontre de la direction de transport de la chaîne dentée (4), et réglable en hauteur.

6. Dispositif selon la revendication 5, caractérisé en ce qu'au-dessus du moyen de pressage (5) et au-dessus de la partie du récipient (3) voisine de ce moyen de pressage, est disposé un couvercle flexible (54) susceptible de pivoter vers le haut sous l'action du fourrage et des produits à épandre, à l'encontre d'une force de rappel élastique.

7. Dispositif selon l'une des revendications 1 à 6, caractérisé en ce que la surface (22) de la benne (2) et/ou du récipient (3) portant le bloc ou la balle de fourrage ou de produit à épandre, présente, en position de hachage et d'épandage, une position inclinée, descendant en s'éloignant par rapport à la chaîne dentée (4) et est garnie de moyens de support (23) diminuant le frottement, tels que des galets.

8. Dispositif selon l'une des revendications 1 à 7, caractérisé en ce qu'il est réalisé sous la forme d'une unité automotrice dont le châssis (10) est muni de roues (11, 12) et de ses propres moyens d'entraînement et de contrôle (13, 14).
